# EUROPÄISCHE PATENTSCHRIFT

(11) **EP 2 431 982 B1**
(45) Veröffentlichungstag und Bekanntmachung des Hinweises auf die Patenterteilung: **26.11.2014**
(21) Anmeldenummer: 10177794.4
(22) Anmeldetag: 21.09.2010
(51) Int. Cl.: H01B 17/28, H01F 27/04, H02G 15/072, H01R 13/53

(54) **Steckbare Durchführung und Hochspannungsanlage mit einer solchen Durchführung**
Plugable feedthrough and high voltage assembly with such a feedthrough
Ligne enfichable et installation haute tension dotée d'une telle ligne

(43) Veröffentlichungstag der Anmeldung: 21.03.2012
(73) Patentinhaber: ABB Technology AG, 8050 Zürich (CH)
(72) Erfinder: Dais, Ansgar, CH-8953 Dietikon (CH); Rocks, Jens, CH-8807 Freienbach (CH); Ilic, Oliver, CH-8102 Oberengstringen (CH)
(74) Vertreter: ABB Patent Attorneys

(56) Entgegenhaltungen:
- EP-A1- 2 053 616
- WO-A1-2006/015735
- DE-B- 1 189 600
- THOMAS KLEIN ET AL: "A New Separable 170 kV Outdoor Bushing System Creates a Multi-Purpose Transformer or Switchgear", INTERNET CITATION, 1. Januar 2006 (2006-01-01), Seite 4PP, XP007917562, Gefunden im Internet: URL:http://replay.waybackmachine.org/20081 112212413/http://pfisterer.com/download_do wnload/d_3584.pdf [gefunden am 2011-03-11]

## Beschreibung

### TECHNISCHES GEBIET

Die vorliegende Erfindung bezieht sich auf eine steckbare Hochspannungsdurchführung zum Anschluss eines externen Stromleiters an eine mit einem flüssigen oder gasförmigen Isolierstoff gefüllte, metallgekapselte Komponente einer Hochspannungsanlage nach dem Oberbegriff von Patentanspruch 1. Die Erfindung betrifft auch eine Hochspannungsanlage mit einer mit einem flüssigen oder gasförmigen Isoliermittel gefüllten, metallgekapselten Komponente und mit der steckbaren Durchführung nach Patentanspruch 1.

Die steckbare Durchführung verbindet einen in der Komponente angeordneten und mit einem flüssigen oder gasförmigen isoliermittel gegenüber der Metallkapselung isolierten internen Stromleiter mit dem externen Stromleiter, der im allgemeinen durch die umgebende Luft isoliert wird, der aber auch mit einem anderen Isoliermittel, wie beispielsweise einem Feststoff, Öl oder SF₆, isoliert und Teil eines Hochspannungskabels, eines Kabelendverschlusses, einer Kabelmuffe oder einer gasisolierten Schaltanlage sein kann.

### STAND DER TECHNIK

Steckbare Durchführungen der eingangs genannten Art sind beispielsweise beschrieben in GB 689 560, DE10 2007 022 641 A1 wie auch in einem als Firmenschrift der Fa. Pfisterer Kontaktsysteme GmbH & Co. KG publizierten Aufsatz von Th. Klein et al. "A New Separable 170 kV Outdoor Bushing System Creates a Multi-Purpose Transformer or Switchgear" aus dem Jahre 2006. Die beschriebenen Steckdurchführungen weisen jeweils ein Steckteil aus, welches bei der Montage des Transformators am Montageort in ein isoliermitteldicht am Transformator angebrachtes Gegensteckteil eingesteckt werden kann. Der Transport und die Wartung des Transformators werden so wesentlich erleichtert.

Beim Einstecken der Durchführung bildet sich zwischen einer Isolierhülse des Gegensteckteils und dem im allgemeinen als Stecker ausgeführten Steckteil der Durchführung eine Fuge aus, die während des Betriebs des Transformators resp. der Durchführung der Wirkung eines starken elektrischen Feldes ausgesetzt ist und die etwa mit Hilfe von Isolieröl (GB 689 560), mit Hilfe einer in die Durchführung integrierten Feldsteuervorrichtung sowie durch Verwendung eines die Fuge begrenzenden Elastomers dielektrisch verfestigt werden kann.

### DARSTELLUNG DER ERFINDUNG

Der Erfindung, wie sie in den Patentansprüchen angegeben ist, liegt die Aufgabe zugrunde, eine steckbare Durchführung der eingangs genannten Art zu schaffen, die sich durch einen einfachen und kompakten Aufbau auszeichnet und die zugleich geeignet ist, ein bei Betrieb der Durchführung wirksames elektrisches Feld auch bei sehr hohen Betriebsspannungen wirksam zu steuern.

Gemäss der vorliegenden Erfindung wird eine steckbare Durchführung zum Anschliessen eines externen Stromleiters an eine mit einem flüssigen oder gasförmigen Isoliermittel gefüllte, metallgekapselte Komponente einer Hochspannungsanlage bereitgestellt, die in koaxialer Anordnung einen längs einer Achse geführten Stromleiter mit einem Steckkontakt und einem Anschluss für einen externen Leiter enthält sowie einen am Stromleiter befestigten Isolator, einen am Isolator befestigten Montageflansch und eine den Stromleiter umfassende Vorrichtung zum Steuern des beim Anlegen von Hochspannung wirkenden elektrischen Feldes. Der Isolator weist einen sich verjüngenden Abschnitt auf, der nach Einstecken der Durchführung in ein die Komponente der Hochspannungsanlage isoliermitteldicht abschliessendes Steckteil eine Fuge dielektrisch verfestigt, die zwischen einer Isolierhülse des Steckteils und dem sich verjüngenden Abschnitt des Isolators angeordnet ist. Die Feldsteuervorrichtung ist als Kondensatorwickel ausgeführt. Der Kondensatorwickel weist voneinander elektrisch isolierte Kondensatorbeläge auf, die in radialer Richtung durch Isolierfolie voneinander mit Abstand gehalten und durch Einbetten des Kondensatorwickels in eine gehärtete Polymermasse in den Isolator integriert sind. Die Kondensatorbeläge sind durch den Montageflansch hindurch in den sich verjüngenden Abschnitt des Isolators geführt.

Da bei der Durchführung nach der Erfindung ein als Feldsteuervorrichtung wirkender Kondensatorwickel in den Isolator integriert ist, der zugleich den Montageflansch trägt, vereinfacht sich die Fertigung der Durchführung erheblich und zeichnet sich die Durchführung zugleich durch einen einfachen und kompakten Aufbau aus. Beim Fertigen des Kondensatorwickels werden leicht geeignet bemessene, gestuft ausgebildete Kondensatorbeläge an geeigneten Positionen in die Isolierfolie eingewickelt. Es wird so eine zuverlässige und zudem sehr genaue Steuerung eines elektrischen Feldes erreicht, das während des Betriebs der Hochspannungsanlage zwischen dem Stromleiter und dem Montageflansch wie auch einem Metallgehäuse der Komponente wirkt. Das geeignete stufenweise Anordnen der Beläge kann beim Fertigen leicht für einen auf der einen Seite des Montageflansches gelegenen, den Anschluss für den externen Stromleiter enthaltenden externen und für einen auf der anderen Seite des Montageflansches gelegenen, der Komponente zugeordneten internen Bereich und damit auch für die Fuge erreicht werden. Es werden so in fertigungstechnisch einfacher Weise die in jedem der beiden Bereiche wie auch in der Fuge anstehenden speziellen Feldsteueraufgaben gelöst. Die Durchführung nach der Erfindung ist daher trotz einfachen und kompakten Aufbaus geeignet, das während des Betriebs der Hochspannungsanlage zu beiden Seiten des Montageflanschs und in der Fuge wirkende elektrische Feld auch bei sehr hohen Betriebsspannungen wirksam zu steuern resp. zu homogenisieren.

Eine die Fuge begrenzende Fläche des sich verjüngenden Isolatorabschnitts kann von einer auf dem Kondensatorwickel gehaltenen, elastisch verformbaren Isolierung gebildet sein, welche mit Vorteil als Elastomer ausgeführt ist. Um die elastisch verformbare Isolierung gut in den Isolator zu integrieren, kann sie in einer vorteilhaften Ausführungsform der Steckdurchführung nach der Erfindung einen in den Kondensatorwickel eingeformten Absatz hintergreifen.

Die vorgenannte Begrenzungsfläche der Fuge kann als Konus ausgebildet sein und verjüngt sich dann kegelförmig. Sie kann sich aber auch tulpenförmig verjüngen. Sie verjüngt sich dann in einem dem Steckkontakt zugewandten Abschnitt wesentlich stärker als in einem vom Steckkontakt abgewandten Abschnitt, in dem sie sich gegebenenfalls parallel zu einem entsprechenden Abschnitt einer von der Isolierhülse des Steckteils gebildeten Begrenzungsfläche der Fuge erstreckt.

Auf einer Aussenfläche des Isolators kann eine Beschirmung aufgebracht sein, die in axialer Richtung vom Montageflansch an einen Anschluss des Stromleiters geführt ist.

Um die elektrische Eigenschaften des feldsteuernden Kondensatorwickels nicht zu beeinträchtigen, kann die gehärtete Polymermasse einen Füllstoff enthalten, der als Diffusionsbarriere für von aussen eindringendes Wasser wirkt. Ein geeigneter Füllstoff kann ein anorganisches Pulver, wie etwa Quarzmehl, enthalten. Alternativ oder zusätzlich kann die Beschirmung auch auf einer Beschichtung des Isolators angeordnet sein, die als Diffusionsbarriere wirkt.

Um eine geeignete Abstufung der Kondensatorbeläge und damit eine homogene Verteilung des elektrischen Feldes in der Fuge zu erreichen, können die dem Steckkontakt zugewandten Enden der Kondensatorbeläge auf einer an die Kontur der Fuge angepassten Hüllfläche liegen.

Die Erfindung umfasst auch eine Hochspannungsanlage mit einer mit einem flüssigen oder gasförmigen Isoliermittel gefüllten Komponente und mit der vorgenannten steckbaren Durchführung, bei der die Durchführung in ein die Komponente der Hochspannungsanlage isoliermitteldicht abschliessendes und eine Isolierhülse enthaltendes Steckteil eingesteckt ist, das als Feldsteuerelement ausgebildet ist.

In einer Ausführungsform dieser Hochspannungsanlage kann die Isolierhülse des Steckteils eine auf Hochspannungspotential führbare Steuerelektrode tragen. Alternativ oder zusätzlich kann die Isolierhülse feldsteuerndes Isoliermaterial enthalten.

Eine die Fuge begrenzende Fläche der Isolierhülse kann von einer elastisch verformbaren Isolierung gebildet sein, welche mit Vorteil als Elastomer ausgeführt ist.

### KURZE BESCHREIBUNG DER ZEICHNUNGEN

Anhand von Zeichnungen wird die Erfindung nachfolgend näher erläutert. Hierbei zeigt:
- Fig.1: eine Aufsicht auf einen längs einer Achse geführten Schnitt durch eine Ausführungsform einer steckbaren Durchführung nach der Erfindung beim Einstecken in eine als Transformator ausgeführten Komponente einer Hochspannungsanlage,
- Fig.2: eine Seitenansicht der Steckdurchführung nach Fig.1 nach Einstecken in den Transformator, wobei eine beim Einstecken gebildete Steckverbindung längs der Achse geschnitten dargestellt ist, und
- Fig.3: in vergrösserter Darstellung einen umrandet dargestellten Abschnitt der Steckverbindung der Durchführung nach Fig.2.

### WEGE ZUR AUSFÜHRUNG DER ERFINDUNG

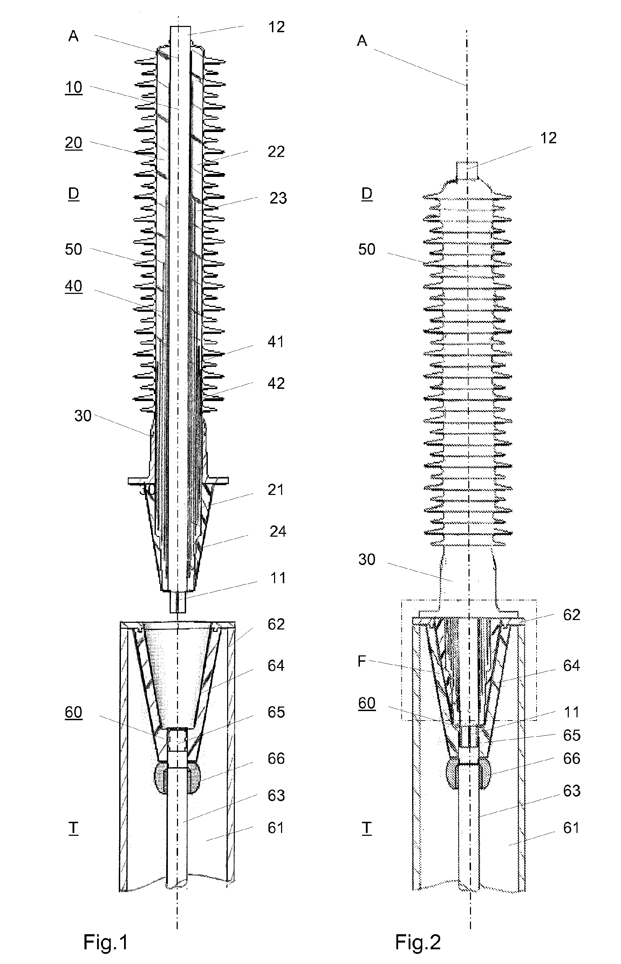

In allen Figuren bezeichnen gleiche Bezugszeichen auch gleichwirkende Teile. Eine in den Figuren 1 und 2 dargestellte, längs einer Achse A erstreckte Durchführung D enthält in koaxialer Anordnung folgende Teile:
- einen längs der Achse A geführten Stromleiter 10, dessen unteres Ende einen als Stift ausgeführten Steckkontakt 11 aufweist und in dessen oberes Ende ein Anschluss 12 an einen externen Hochspannungsleiter eingeformt ist,
- einen als Rotationskörper ausgeführten Isolator 20, der einen auf der Aussenfläche des Stromleiters 10 befestigten, starren Kondensatorwickel 40 und eine auf einer Stirnfläche des Kondensatorwickels 40 befestigte, elastisch verformbare Isolierung 24 aufweist,
- einen auf der Aussenfläche des Isolators 20 befestigten Montageflansch 30, und
- eine von einem hydrophoben Polymer, wie typischerweise Silicon oder EPDM, gebildete Beschirmung 50, welche als Schutz vor der Witterung, vor Schmutz und/oder vor Strahlung im allgemeinen auf einen Abschnitt der Aussenfläche des Isolators 20 aufgebracht wird, der sich in axialer Richtung vom Montageflansch 30 auf den Stromanschluss 12 erstreckt.

Der Isolator 20 weist einen sich verjüngenden unteren Abschnitt 21 sowie einen an diesen Abschnitt sich anschliessenden Abschnitt 22 auf, der vorwiegend zylinderförmig ausgebildet ist. Der Abschnitt 22 ist durch den Montageflansch 30 hindurch zum Freiluftanschluss 12 geführt, wohingegen der Abschnitt 21 erst unterhalb des Montageflansches 30 zwischen diesem und dem Steckkontakt 11 angeordnet ist. Der Kondensatorwickel 40 ist in den Isolator 20 integriert und weist voneinander elektrisch isolierte Kondensatorbeläge 41 auf, die in radialer Richtung durch Isolierfolie 42, welche typischerweise Papier und/oder Kunststoff enthält, mit Abstand zueinander gehalten sind. Die Längen der Kondensatorbeläge 41 sowohl in Richtung zum Freiluftanschluss 12 als auch in Richtung zum Steckkontakt 11 verkleinern sich mit zunehmendem, radialem Abstand zum Stromleiter 10 stetig. Die in die Folie 42 eingewickelten oder auf die Folie aufgedruckten, elektrisch leitenden Kondensatorbeläge 41 und insbesondere deren dem Steckkontakt 11 zugewandten Enden sind in eine gehärtete Polymermatrix 23 eingebettet.

Die gehärtete Polymermasse 23 weist ein gefülltes oder ein ungefülltes Polymer, typischerweise auf der Basis eines Epoxidharzes, auf. Gegebenenfalls kann das Isoliermaterial 23 zusätzlich einen pulverförmigen Füllstoff, etwa auf der Basis von Quarz, enthalten. Die Fertigung des Kondensatorwickels 40 resp. der Durchführung wird erleichtert, wenn die Isolierfolie 42 und gegebenenfalls auch die Kondensatorbeläge 41 geeignet bemessene Öffnungen aufweisen. Beim Imprägnieren eines durch Wickeln der Isolierfolie 42 und durch Einbringen der Kondensatorbeläge 41 vorgefertigten Kondensatorwickels mit der ungehärteten Polymermasse können dann die Partikel des Füllstoffs leicht durch diese Öffnungen dringen.

Der Kondensatorwickel 40 dient der Steuerung eines elektrischen Feldes, welches sich während des Betriebs der Durchführung D zwischen dem dann auf Hochspannungspotential befindlichen Stromleiter 10 und dem dann auf Erdpotential gehaltenen Montageflansch 30 ausbildet.

Die sich verjüngende äussere Fläche des Isolatorabschnitts 21 wird von der auf einer Stirnseite des Kondensatorwickels 40 gehaltenen, elastisch verformbaren Isolierung 24 gebildet. Diese Isolierung enthält mit Vorteil ein Elastomer, etwa auf der Basis EPDM oder Silicon. Sie erstreckt sich von der Unterseite des Montageflansches 30 bis zum Steckkontakt 11. Sie wird erst dann auf den Kondensatorwickel 40 aufgebracht, wenn der Montageflansch 30 etwa durch Verklemmen oder durch Kleben am Kondensatorwickel 40 festgesetzt ist. In fertigungstechnisch vorteilhafter Weise wird dann die Isolierung 24 zusammen mit der Beschirmung 50 auf den Kondensatorwickel 40 aufgegossen.

Aus Fig.1 ist zu erkennen, dass die Durchführung D längs der Achse A nach unten geführt und in ein als Buchse ausgeführtes Steckteil 60 eines Transformators T eingesteckt werden kann. Der Transformator T weist ein auf Erdpotential befindliches und mit einem flüssigen oder gasförmigen Isoliermittel 61, wie insbesondere Isolieröl, gefülltes Metallgehäuse 62 auf. Ein mit einer nicht dargestellten Oberspannungswicklung verbundener und ebenfalls entlang der Achse A erstreckter Stromleiter 63 des Transformators T ist an seinem oberen Ende an einer Isolierhülse 64 des Steckteils 60 gehalten und weist einen als Hülse ausgeführten Steckkontakt 65 auf. Die den Stromleiter 63 haltende und den Steckkontakt 65 auf der Achse A zentrierende Isolierhülse 64 ist an einem als Flanschansatz ausgebildeten Teil des Gehäuses 62 isoliermitteldicht befestigt und verjüngt sich entlang der Achse A von der Befestigungsstelle stetig nach unten ins Innere des Transformators T. An dem im Inneren des Transformators gelegenen, unteren Ende der Isolierhülse 64 sind der Steckkontakt 65 und eine mit dem Stromleiter 63 elektrisch leitend verbundene Steuerelektrode 66 gehalten. Die nach innen weisende Fläche der Isolierhülse 64 weist weitgehend die gleiche Kontur wie die nach aussen weisende Fläche des sich verjüngenden Isolatorabschnitts 21 auf.

Wie aus Fig.2 ersichtlich ist, bildet sich beim Einstecken der Durchführung D in das ersichtlich als Buchse ausgeführte Steckteil 60 zwischen der zur Achse A weisenden Innenfläche der Isolierhülse 64 und der von der Achse A weg nach aussen weisenden Fläche des verjüngenden Isolatorabschnitt 21 eine Fuge F aus. Beim Einstecken kommen die Steckkontakte 11 und 65 miteinander in Eingriff und wird so eine Stromverbindung zwischen den beiden Stromleitern 10 und 63 hergestellt. Danach wird der Montageflansch 30 mit Hilfe von nicht dargestellten Schrauben am Metallgehäuse 62 festgesetzt. Dabei wird die Isolierung 24 gegen die Innenfläche der Isolierhülse 64 gepresst und elastisch verformt, wodurch sich die Fuge F dielektrisch verfestigt.

Beim Fertigen des Kondensatorwickels 40 kann durch Einbringen längenmässig geeignet abgestufter Kondensatorbeläge 41 an geeigneten Positionen eine sehr genaue Steuerung des zwischen dem Stromleiter 10 und dem Montageflansch 30 wie auch dem Metallgehäuse 62 wirkenden elektrischen Feldes erreicht werden. Es wird so eine feinstufige Homogenisierung des elektrische Feldes sowohl in einem oberhalb des Montageflansches 30 gelegenen, dem Isoliermittel Luft ausgesetzten äusseren Bereich als auch in einem unterhalb des Montageflansches 30 gelegenen, dem Isoliermittel des Transformators T, also insbesondere einem Isolieröl, ausgesetzten internen Bereich und damit auch in der Fuge F erreicht. Es werden so in fertigungstechnisch einfacher Weise die in jedem der beiden Bereiche und in der Fuge anstehenden speziellen Feldsteueraufgaben gelöst. Der äussere Bereich weist - wie dargestellt - als Isoliermittel im allgemeinen zwar Luft auf, kann aber ein anderes Isoliermittel aufweisen, bei einem Kabelendverschluss beispielsweise Öl, bei einer gasisolierten Schaltanlage ein Isoliergas, wie typischerweise SF₆.

Anstelle eines mit Isolieröl gefüllten Transformators T kann die Hochspannungsanlage auch eine Komponente - etwa ein Schaltgerät - einer mit einem Isoliergas - wie insbesondere SF₆ - gefüllten, metallgekapselten Schaltanlage enthalten.

In einer die Durchführung D enthaltenden Hochspannungsanlage wird eine besonders feine Steuerung des elektrischen Feldes im Bereich der Isolierhülse 64 und insbesondere in der Fuge F erreicht, wenn das Steckteil 60 als Feldsteuerelement ausgebildet ist. Dies kann durch die bei Betrieb der Anlage auf Hochspannungspotential geführte Steuerelektrode 66 oder aber auch durch Verwendung von feldsteuerndem Material in der Isolierhülse 64 oder durch gemeinsamen Einsatz der Steuerelektrode 66 und des feldsteuernden Isoliermaterials in der Isolierhülse erreicht werden.

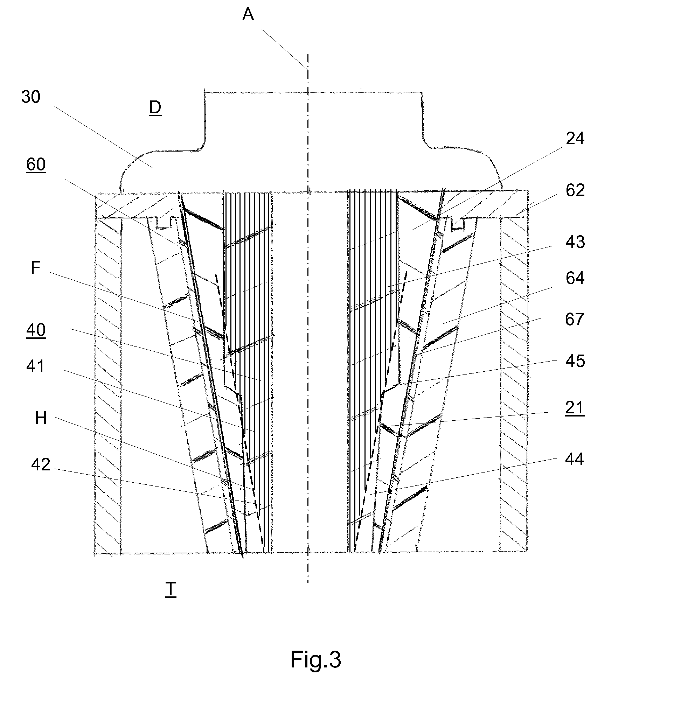

Wie aus Fig.3 ersichtlich ist, kann zusätzlich zur oder anstelle der elastisch verformbaren Isolierung 24 eine elastisch verformbare Isolierung 67 auch in die Isolierhülse 64 integriert werden. Bildet diese - vorzugsweise als Elastomer auf der Basis Silicon oder EPDM ausgeführte - Isolierung die die Fuge F begrenzende Fläche der Isolierhülse 64, so wird beim Einstecken der Durchführung D in den Transformator T die dielektrische Festigkeit der Fuge zusätzlich verbessert.

Aus Fig.3 ist ferner zu erkennen, dass die dem Steckkontakt 11 zugewandten Enden der Kondensatorbeläge 41 auf einer an die Kontur der Fuge F angepassten Hüllfläche H liegen. Es wird so eine besonders gleichmässige Steuerung des elektrischen Feldes in der Fuge F erreicht.

Aus Fig.3 ist auch ersichtlich, dass der Kondensatorwickel 40 zwei im sich verjüngenden Isolatorschnitt 21 gelegene Abschnitte 43, 44 aufweist. Der Abschnitt 43 ist zylinderförmig ausgebildet und ist durch einen ringförmig um die Achse A geführten, stufenförmig ausgebildeten Absatz 45 von dem einen geringeren Durchmesser aufweisenden, sich nach unten (in Richtung des Steckkontakts 11) verjüngenden Abschnitt 44 abgesetzt. Die Isolierung hintergreift der Absatz 45 und verbessert so die Haftung der Isolierung 24 auf dem Kondensatorwickel 40. Dies ist beim Einstecken der Durchführung D ins Steckteil 60 von Bedeutung, da ab diesem Zeitpunkt die Isolierung 24 entgegen der Steckrichtung mit grossen Scherkräften belastet wird. Der Absatz nimmt einen Teil der Scherkräfte auf und verbessert dementsprechend die Haftung der Isolierung 24 auf dem Kondensatorwickel 40.

### BEZUGSZEICHENLISTE

- 10: Stromleiter
- 11: Steckkontakt
- 12: externer Anschluss
- 20: Isolator
- 21, 22: Abschnitte des Isolators 20
- 23: gehärtetes Polymermaterial
- 24: Isolierung
- 30: Montageflansch
- 40: Kondensatorwickel
- 41: Kondensatorbeläge
- 42: Isolierfolie
- 43: zylinderförmiger Abschnitt des Kondensatorwickels
- 44: sich verjüngender Abschnitt des Kondensatorwickels
- 45: Absatz
- 50: Beschirmung
- 60: Steckteil
- 61: Isoliermittel
- 62: Metallgehäuse
- 63: Stromleiter
- 64: Isolierhülse
- 65: Steckkontakt
- 66: Steuerelektrode
- 67: Isolierung
- A: Achse
- D: Durchführung
- F: Fuge
- H: Hüllfläche
- T: Transformator

## Patentansprüche

1. Steckbare Hochspannungsdurchführung (D) zum Anschliessen eines externen Stromleiters an eine mit einem flüssigen oder gasförmigen Isoliermittel (61) gefüllte, metallgekapselte Komponente (T) einer Hochspannungsanlage, enthaltend in koaxialer Anordnung einen längs einer Achse (A) geführten Stromleiter (10) mit einem Steckkontakt (11) und einem Anschluss (12) für den externen Leiter, einen am Stromleiter (10) befestigten Isolator (20), einen am Isolator (20) befestigten Montageflansch (30) und eine den Stromleiter (10) umfassende Vorrichtung zum Steuern des beim Anlegen von Hochspannung wirkenden elektrischen Felds, bei der der Isolator (20) einen sich verjüngenden Abschnitt (21) aufweist, der nach Einstecken der Durchführung (D) in ein die Komponente (T) der Hochspannungsanlage isoliermitteldicht abschliessendes Steckteil (60) eine Fuge (F) dielektrisch verfestigt, die zwischen einer Isolierhülse (64) des Steckteils (60) und dem sich verjüngenden Abschnitt (21) des Isolators angeordnet ist, **dadurch gekennzeichnet, dass** die Feldsteuervorrichtung als Kondensatorwickel (40) ausgeführt ist, dass der Kondensatorwickel (40) voneinander elektrisch isolierte Kondensatorbeläge (41) aufweist, die in radialer Richtung durch Isolierfolie (42) voneinander mit Abstand gehalten und durch Einbetten des Kondensatorwickels (40) in eine gehärtete Polymermasse (23) in den Isolator (20) integriert sind, und dass die Kondensatorbeläge (41) durch den Montageflansch (30) hindurch in den sich verjüngenden Abschnitt des Isolators (20) geführt sind.

2. Durchführung nach Anspruch 1, **dadurch gekennzeichnet, dass** eine die Fuge (F) begrenzende Fläche des Isolatorabschnitts (21) von einer auf dem Kondensatorwickel (40) gehaltenen, elastisch verformbaren Isolierung (24) gebildet ist.

3. Durchführung nach Anspruch 2, **dadurch gekennzeichnet, dass** die elastisch verformbare Isolierung (24) als Elastomer ausgeführt ist.

4. Durchführung nach einem der Ansprüche 2 oder 3, **dadurch gekennzeichnet, dass** die elastisch verformbare Isolierung (24) einen in den Kondensatorwickel (40) eingeformten Absatz (45) hintergreift.

5. Durchführung nach einem der Ansprüche 1 bis 4, **dadurch gekennzeichnet, dass** auf einer Aussenfläche des Isolators (20) eine Beschirmung (50) aufgebracht ist, die in axialer Richtung vom Montageflansch (30) auf einen Anschluss (12) des Stromleiters (10) geführt ist.

6. Durchführung nach Anspruch 5, **dadurch gekennzeichnet, dass** die gehärtete Polymermasse (23) einen Füllstoff enthält, der als Diffusionsbarriere für von aussen eindringendes Wasser wirkt.

7. Durchführung nach einem der Ansprüche 5 oder 6, **dadurch gekennzeichnet, dass** die Beschirmung (50) auf einer Beschichtung des Isolators (20) angeordnet ist, die als Diffusionsbarriere für eindringendes Wasser wirkt.

8. Durchführung nach einem der Ansprüche 1 bis 7, **dadurch gekennzeichnet, dass** die dem Steckkontakt (11) zugewandten Enden der Kondensatorbeläge (41) auf einer an die Kontur der Fuge (F) angepassten Hüllfläche (H) liegen.

9. Hochspannungsanlage mit einer mit einem flüssigen oder gasförmigen Isoliermittel (61) gefüllten Komponente (T) und mit einer steckbaren Durchführung (D) nach einem der Ansprüche 1 bis 8, welche in ein die Komponente (T) der Hochspannungsanlage isoliermitteldicht abschliessendes und eine Isolierhülse (64) enthaltendes Steckteil (60) eingesteckt ist, **dadurch gekennzeichnet, dass** das Steckteil (60) als Feldsteuerelement ausgebildet ist.

10. Hochspannungsanlage nach Anspruch 9, **dadurch gekennzeichnet, dass** die Isolierhülse (64) eine auf Hochspannungspotential führbare Steuerelektrode (66) trägt.

11. Hochspannungsanlage nach einem der Ansprüche 9 oder 10, **dadurch gekennzeichnet, dass** die Isolierhülse (64) feldsteuerndes Isoliermaterial enthält.

12. Hochspannungsanlage nach einem der Ansprüche 9 bis 11, **dadurch gekennzeichnet, dass** eine die Fuge (F) begrenzende Fläche der Isolierhülse (64) von einer elastisch verformbaren Isolierung (67) gebildet ist.

13. Hochspannungsanlage nach Anspruch 12, **dadurch gekennzeichnet, dass** die elastisch verformbare Isolierung (67) als Elastomer ausgeführt ist.

## Claims

1. Plug-in high-voltage bushing (D) for connection of an external electrical conductor to a metal-encapsulated component (T), which is filled with a liquid or gaseous insulating agent (61), of a high-voltage installation, containing, in a coaxial arrangement, an electrical conductor (10) which is routed along an axis (A) and has a plug contact (11) and a connection (12) for the external conductor, an insulator (20) which is attached to the electrical conductor (10), a mounting flange (30) which is attached to the insulator (20), and an apparatus which surrounds the electrical conductor (10) for controlling the electrical field which acts when high voltage is applied, in which the insulator (20) has a tapering section (21) which dielectrically strengthens a joint (F) after insertion of the bushing (D) into a plug part (60) which closes the component (T) of the high-voltage installation forming a seal for the insulating agent, which joint (F) is arranged between an insulating sleeve (64) of the plug part (60) and the tapering section (21) of the insulator, **characterized in that** the field control apparatus is in the form of a capacitor winding (40), **in that** the capacitor winding (40) has capacitor plates (41) which are electrically isolated from one another, are kept at a distance from one another in the radial direction by insulating film (42), and are integrated in the insulator (20) by embedding the capacitor winding (40) in a cured polymer compound (23), and **in that** the capacitor plates (41) are passed through the mounting flange (30) into the tapering section of the insulator (20).

2. Bushing according to Claim 1, **characterized in that** a surface, which bounds the joint (F), of the insulator section (21) is formed by elastically deformable insulation (24) which is held on the capacitor winding (40).

3. Bushing according to Claim 2, **characterized in that** the elastically deformable insulation (24) is in the form of elastomer.

4. Bushing according to one of Claims 2 or 3, **characterized in that** the elastically deformable insulation (24) engages behind a step (45) which is formed in the capacitor winding (40).

5. Bushing according to one of Claims 1 to 4, **characterized in that** a shield (50) is fitted to an outer surface of the insulator (20) and is passed in the axial direction from the mounting flange (30) to a connection (12) of the electrical conductor (10).

6. Bushing according to Claim 5, **characterized in that** the cured polymer compound (23) contains a filler which acts as a diffusion barrier for water which enters from the outside.

7. Bushing according to one of Claims 5 or 6, **characterized in that** the shield (50) is arranged on a coating on the insulator (20), which acts as a diffusion barrier for water which enters.

8. Bushing according to one of Claims 1 to 7, **characterized in that** those ends of the capacitor plates (41) which face the plug contact (11) are located on an envelope surface (H) which is matched to the contour of the joint (F).

9. High-voltage installation having a component (T) which is filled with a liquid or gaseous insulating agent (61) and having a plug-in bushing (D) according to one of Claims 1 to 8, which is inserted into a plug part (60) which contains an insulating sleeve (64) and closes the component (T) of the high-voltage insulation forming a seal for the insulating agent, **characterized in that** the plug part (60) is in the form of a field control element.

10. High-voltage installation according to Claim 9, **characterized in that** the insulating sleeve (64) is fitted with a control electrode (66) which can carry high-voltage potential.

11. High-voltage installation according to one of Claims 9 or 10, **characterized in that** the insulating sleeve (64) contains field-controlling insulating material.

12. High-voltage installation according to one of Claims 9 to 11, **characterized in that** a surface, which bounds the joint (F), of the insulating sleeve (64) is formed by elastically deformable insulation (67).

13. High-voltage installation according to Claim 12, **characterized in that** the elastically deformable insulation (67) is in the form of elastomer.

## Revendications

1. Passage à haute tension enfichable (D) destiné à raccorder un conducteur externe de courant à un composant (T) rempli d'un agent isolant (61) liquide ou gazeux et encapsulé dans une enveloppe métallique d'une installation à haute tension, le passage contenant en agencement coaxial
un conducteur de courant (10) guidé le long d'un axe (A) et doté d'un contact enfichable (11) et d'une borne de raccordement (12) pour le conducteur externe,
un isolant (20) fixé sur le conducteur de courant (10),
une bride de montage (30) fixée sur l'isolant (20) et
un dispositif qui entoure le conducteur de courant (10) et qui commande du champ électrique qui agit lors de l'application de la haute tension,
l'isolant (20) présentant une partie (21) rétrécie qui fixe diélectriquement une jonction (F) disposée entre une douille isolante (64) de la pièce enfichable (60) rétrécie (21) de l'isolant après l'insertion du passage (D) dans une pièce d'enfichage (60) qui ferme le composant (T) de l'installation à haute tension de manière étanche vis-à-vis de l'agent isolant, **caractérisé en ce que**
le dispositif de contrôle de champ est configuré comme enroulement (40) de condensateur,
**en ce que** l'enroulement (40) de condensateur présente des couches (41) de condensateur isolées électriquement les unes des autres, maintenues à distance mutuelle dans la direction radiale par une feuille isolante (42) et intégrées dans l'isolant (20) par incorporation de l'enroulement (40) de condensateur dans une pâte polymère (23) durcie et
**en ce que** les couches (41) de condensateur sont passées à travers la bride de montage (30) pour pénétrer dans la partie rétrécie de l'isolant (20).

2. Passage selon la revendication 1, **caractérisé en ce qu'**une surface de la partie (21) de l'isolant qui délimite la jonction (F) est formée par un isolant (24) élastiquement déformable maintenu sur l'enroulement (40) de condensateur.

3. Passage selon la revendication 2, **caractérisé en ce que** l'isolant élastiquement déformable (24) est réalisé sous la forme d'un élastomère.

4. Passage selon l'une des revendications 2 ou 3, **caractérisé en ce que** l'isolant élastiquement déformable (24) accroche par l'arrière un appendice (45) formé dans l'enroulement (40) de condensateur.

5. Passage selon l'une des revendications 1 à 4, **caractérisé en ce qu'**un écran (50) qui est amené en direction radiale depuis la bride de montage (30) sur une borne de raccordement (12) du conducteur de courant (10) est placé sur une surface extérieure de l'isolant (20).

6. Passage selon la revendication 5, **caractérisé en ce que** la pâte polymère durcie (23) contient une charge qui agit comme barrière de diffusion pour l'eau qui pénètre.

7. Passage selon l'une des revendications 5 ou 6, **caractérisé en ce que** l'écran (50) est disposé sur un revêtement de l'isolant (20) qui sert de barrière de diffusion pour l'eau qui pénètre.

8. Passage selon l'une des revendications 1 à 7, **caractérisé en ce que** des couches (41) de condensateur tournée vers le contact enfichable (11) sont situées sur une surface d'enveloppe (H) adaptée au contour de la jonction (F).

9. Installation à haute tension présentant un composant (T) rempli d'un agent isolant (61) liquide ou gazeux et doté d'un passage enfichable (D) selon l'une des revendications 1 à 8, qui est enfiché dans une pièce enfichable (60) qui ferme de manière étanche vis-à-vis de l'agent isolant le composant (T) de l'installation à haute tension et qui contient une douille isolante (64), **caractérisée en ce que**
la pièce enfichable (60) est configurée comme élément de commande du champ.

10. Installation à haute tension selon la revendication 9, **caractérisée en ce que** la douille isolante (64) porte une électrode de commande (66) qui peut être amenée au potentiel de la haute tension.

11. Installation à haute tension selon l'une des revendications 9 ou 10, **caractérisée en ce que** la douille isolante (64) contient un matériau isolant contrôlant le champ.

12. Installation à haute tension 9 à 11, **caractérisée en ce qu'**une surface de la douille isolante (64) qui délimite la jonction (F) est formée d'une isolation élastiquement déformable (67).

13. Installation à haute tension selon la revendication 12, **caractérisée en ce que** l'isolation élastiquement déformable (67) est configurée comme élastomère.
